# EUROPÄISCHE PATENTANMELDUNG

(11) **EP 3 663 876 A1**
(43) Veröffentlichungstag der Anmeldung: **10.06.2020**
(21) Anmeldenummer: 18210394.5
(22) Anmeldetag: 05.12.2018
(51) Int. Cl.: G05B 19/406, B28D 7/00

(54) **VERFAHREN ZUM BETREIBEN EINES SYSTEMS UND SYSTEM**

(71) Anmelder: Hilti Aktiengesellschaft, 9494 Schaan (LI)
(72) Erfinder: Schaefer, Martin, 6858 Schwarzach (AT); Balter, Marco, 6800 Feldkirch (AT); Metzler, Christian, 6822 Satteins (AT)
(74) Vertreter: Hilti Aktiengesellschaft Corporate Intellectual Property

(57) **Zusammenfassung**

Es wird ein Verfahren zum Betreiben eines eine Hauptwerkzeugmaschine (5) und ein Hilfsgerät (10) umfassenden Systems (1) beschrieben, wobei die Hauptwerkzeugmaschine (5) mit einer Eingabeeinrichtung (4) und das Hilfsgerät mit einer Betätigungseinrichtung (12) ausgeführt ist und eine Steuereinrichtung (9) vorgesehen ist. Das Verfahren umfasst folgende Schritte:
- Senden wenigstens eines eine Verbindungsanfrage repräsentierenden Signals von der Sende- und Empfangseinrichtung (3) der Hauptwerkzeugmaschine (5) an die Sende- und Empfangseinrichtung (13) des Hilfsgeräts (10) nach einer anwenderseitigen Betätigung der Eingabeeinrichtung (4) der Hauptwerkzeugmaschine (5);
- Senden wenigstens eines eine Verbindungsantwort repräsentierenden weiteren Signals von der Sende- und Empfangseinrichtung (13) des Hilfsgeräts (10) an die Sende- und Empfangseinrichtung (3) der Hauptwerkzeugmaschine (5) nach einer anwenderseitigen Betätigung der Betätigungseinrichtung (12) der Hauptwerkzeugmaschine (5);
- Herstellen einer Verbindung zwischen der Hauptwerkzeugmaschine (5) und des Hilfsgeräts (10) (S8); und
- Aktivieren und/oder Testen einer Not-Aus-Funktionalität der Betätigungseinrichtung (12) durch die anwenderseitige Betätigung der Betätigungseinrichtung (12) des Hilfsgeräts (10). Es werden weiterhin ein Hilfsgerät (10) und ein System (1) zur Durchführung eines derartigen Verfahrens beschrieben.

## Beschreibung

Die vorliegende Erfindung betrifft ein Verfahren zum Betreiben eines eine Hauptwerkzeugmaschine und ein Hilfsgerät umfassenden Systems gemäß Patentanspruch 1. Weiterhin betrifft die Erfindung ein Hilfsgerät zur Durchführung des Verfahrens gemäß Patentanspruch 4 und ein eine Hauptwerkzeugmaschine und ein derartiges Hilfsgerät aufweisendes System zur Durchführung eines derartigen Verfahrens gemäß Patentanspruch 8.

Aus der Praxis sind Hauptwerkzeugmaschinen darstellende Kernbohrmaschinen bekannt, welche in Kombination mit einem beispielsweise als Bohrkrone ausgeführten Bohrwerkzeug zur Herstellung von Bohrungen in beispielsweise mineralischen Materialien, wie z. B. Beton, Ziegelwerk oder dergleichen ausgebildet sind. Zur Unterstützung eines Kernbohrvorgangs können mehrere Hilfsgeräte vorgesehen sein. Beispielsweise kann ein Maschinenständer zur Halterung der Kernbohrmaschine und eine Vorschubeinrichtung zur insbesondere automatisierten Verlagerung der Kernbohrmaschine entlang des Maschinenständers zum Einsatz kommen.

Dabei ist das Vorsehen einer Steuereinrichtung und einer drahtlosen Übertragungseinrichtung bekannt, wobei sowohl die Kernbohrmaschine als auch das Hilfsgerät jeweils eine Sende- und Empfangseinrichtung zum Austausch von Signalen aufweisen. Zur Herstellung einer sicheren drahtlosen Kommunikation zwischen der Kernbohrmaschine und dem Hilfsgerät weist die Kernbohrmaschine eine Eingabeeinrichtung auf, wobei nach anwenderseitiger Betätigung der Eingabeeinrichtung ein eine Verbindungsanfrage repräsentierendes Signal von der Kernbohrmaschine an das Hilfsgerät gesendet wird. Das Hilfsgerät weist eine Betätigungseinrichtung auf, mittels welcher ein eine Verbindungsantwort repräsentierendes weiteres Signal von dem Hilfsgerät an die Kernbohrmaschine gesendet wird und daraufhin ein Paarungs- und Authentifizierungsverfahren abgeschlossen wird.

Vor einer Inbetriebnahme des Hilfsgeräts ist von einem Anwender ein Not-Aus-Schalter zu testen und in eine Freigabestellung zu versetzen, um einen Betrieb des Hilfsgeräts zu ermöglichen.

Ein derartiges Vorgehen zur Herstellung der sicheren Verbindung und zur Aktivierung bzw. zum Testen der Not-Aus-Funktionalität ist allerdings aufwändig.

Es ist Aufgabe der vorliegenden Erfindung, ein Verfahren zum Betreiben eines eine Hauptwerkzeugmaschine und ein Hilfsgerät aufweisenden Systems und ein Hilfsgerät und ein System zur Durchführung eines derartigen Verfahrens bereitzustellen, wobei auf eine einfache, sichere und kostengünstige Weise eine sichere Kommunikation zwischen der Hauptwerkzeugmaschine und dem Hilfsgerät und eine Aktivierung bzw. ein Testen einer Not-Aus-Funktionalität erzielbar ist.

Die Aufgabe wird mit einem Verfahren zum Betreiben eines eine Hauptwerkzeugmaschine und ein Hilfsgerät umfassenden Systems, wobei die Hauptwerkzeugmaschine und das Hilfsgerät jeweils eine Sende- und Empfangseinrichtung einer Übertragungseinrichtung aufweisen, und wobei die Hauptwerkzeugmaschine mit einer Eingabeeinrichtung und das Hilfsgerät mit einer Betätigungseinrichtung ausgeführt ist und eine Steuereinrichtung vorgesehen ist, dadurch gelöst, dass das Verfahren folgende Schritte umfasst:
- Senden wenigstens eines eine Verbindungsanfrage repräsentierenden Signals von der Sende- und Empfangseinrichtung der Hauptwerkzeugmaschine an die Sende- und Empfangseinrichtung des Hilfsgeräts nach einer anwenderseitigen Betätigung einer Eingabeeinrichtung der Hauptwerkzeugmaschine;
- Senden wenigstens eines eine Verbindungsantwort repräsentierenden weiteren Signals von der Sende- und Empfangseinrichtung des Hilfsgeräts an die Sende- und Empfangseinrichtung der Hauptwerkzeugmaschine nach einer anwenderseitigen Betätigung der Betätigungseinrichtung der Hauptwerkzeugmaschine;
- Herstellen einer Verbindung zwischen der Hauptwerkzeugmaschine und dem Hilfsgerät; und
- Aktivieren und/oder Testen einer Not-Aus-Funktionalität der Betätigungseinrichtung durch die anwenderseitige Betätigung der Betätigungseinrichtung des Hilfsgeräts.

Mit dem erfindungsgemäßen Verfahren ist sowohl eine sichere Verbindung zwischen der Hauptwerkzeugmaschine und dem Hilfsgerät insbesondere durch ein Paarungs- und Authentifizierungsverfahren, einen sogenannten Pairing Process, als auch eine Not-Aus-Funktionalität auf kostengünstige, einfache und sichere Weise erzielbar. Ein erfindungsgemäßes Verfahren ist kostengünstig umsetzbar, da zur Herstellung der sicheren Verbindung zwischen der Hauptwerkzeugmaschine und dem Hilfsgerät auf Seiten des Hilfsgeräts lediglich eine einzige Betätigungseinrichtung erforderlich ist. Das erfindungsgemäße Verfahren ist einfach und sicher umsetzbar, da die Herstellung der sicheren Verbindung und das Aktivieren und/oder das Testen der Not-Aus-Funktionalität gemeinsam in einem einzigen Vorgang durchgeführt werden und Teil eines intuitiv umsetzbaren Vorgangs sind.

Eine sichere Verbindung zwischen der Hauptwerkzeugmaschine und dem Hilfsgerät wird insbesondere etabliert, wenn das weitere Signal von der Steuereinrichtung verifiziert wird und beispielsweise innerhalb einer vorgegebenen Zeitspanne nach der Übermittlung des Signals von der Hauptwerkzeugmaschine an das Hilfsgerät von der Sende- und Empfangseinrichtung der Hauptwerkzeugmaschine empfangen wird. Um die sichere Verbindung zwischen der Hauptwerkzeugmaschine und dem Hilfsgerät herstellen zu können, kann beispielsweise ein weiterer Datenaustausch zwischen der Hauptwerkzeugmaschine und dem Hilfsgerät vorgesehen sein, der eine Interaktion, eine Verschlüsselung, ein Signing und die Verwendung von normierten Protokollen insbesondere zur funktionalen Sicherheit beinhalten kann.

Bei einer einfach durchzuführenden Ausführungsform eines Verfahrens nach der Erfindung kann es vorgesehen sein, dass das Hilfsgerät durch die anwenderseitige Betätigung der Betätigungseinrichtung des Hilfsgeräts in einen einen Betrieb des Hilfsgeräts freigebenden Zustand überführt wird und hierfür keine weitere anwenderseitige Aktion erforderlich ist.

Ein sicherer Betrieb des Systems ist auf einfache Weise erzielbar, wenn bei einer Betätigung der Betätigungseinrichtung nach einer Aktivierung der Not-Aus-Funktionalität und bei einem Betrieb des Hilfsgeräts das Hilfsgerät und/oder die Hauptwerkzeugmaschine deaktiviert wird bzw. werden.

Es wird weiterhin ein Hilfsgerät zur Durchführung eines derartigen Verfahrens vorgeschlagen, wobei das Hilfsgerät eine Sende- und Empfangseinrichtung einer Übertragungseinrichtung und eine Betätigungseinrichtung aufweist.

Ein erfindungsgemäß ausgeführtes Hilfsgerät ist kostengünstig herstellbar, da lediglich eine einzige Betätigungseinrichtung zur Herstellung einer sicheren Verbindung zwischen der Hauptwerkzeugmaschine und dem Hilfsgerät und zum Testen bzw. Aktivieren der Not-Aus-Funktionalität erforderlich ist. Das Hilfsgerät ist weiterhin einfach und sicher betreibbar, da die Herstellung der sicheren Verbindung und der Test der Not-Aus-Funktionalität bzw. dem Aktivieren der Not-Aus-Funktionalität gemeinsam in einem einzigen Vorgang durchgeführt werden und Teil eines intuitiv umsetzbaren Vorgangs sind.

Bei einer einfach und kostengünstig umsetzbaren Ausführung eines Hilfsgeräts nach der Erfindung ist die Betätigungseinrichtung zwischen zwei Positionen verstellbar, wobei in einer ersten Position der Betätigungseinrichtung ein Betrieb des Hilfsgeräts unterbunden und in einer zweiten Position der Betätigungseinrichtung ein Betrieb des Hilfsgeräts freigegeben ist und eine Not-Aus-Funktionalität aktiviert ist.

Die Betätigungseinrichtung ist vorzugsweise als Schalter, Taster oder dergleichen ausgeführt.

Bei dem Hilfsgerät handelt es sich beispielsweise um eine Vorschubeinrichtung für eine insbesondere als Kernbohrmaschine oder Wandsägemaschine ausgeführte Hauptwerkzeugmaschine.

Es wird weiterhin ein System zur Durchführung eines derartigen Verfahrens vorgeschlagen, wobei eine Hauptwerkzeugmaschine, ein derartiges Hilfsgerät und eine Steuereinrichtung vorgesehen sind und sowohl die Hauptwerkzeugmaschine als auch das Hilfsgerät jeweils mit einer Sende- und Empfangseinrichtung einer Übertragungseinrichtung ausgeführt sind, und wobei die Hauptwerkzeugmaschine eine Eingabeeinrichtung und das Hilfsgerät eine Betätigungseinrichtung aufweist.

Ein erfindungsgemäß ausgeführtes System ist kostengünstig herstellbar, da eine einzige Betätigungseinrichtung des Hilfsgeräts zur Herstellung einer sicheren Verbindung zwischen der Hauptwerkzeugmaschine und dem Hilfsgerät und zum Testen bzw. Aktivieren der Not-Aus-Funktionalität ausreicht. Das System ist weiterhin einfach und sicher betreibbar, da die Herstellung der sicheren Verbindung und der Test der Not-Aus-Funktionalität bzw. dem Aktivieren der Not-Aus-Funktionalität gemeinsam in einem einzigen Vorgang durchführbar und Teil eines intuitiv umsetzbaren Vorgangs sind.

Es kann vorgesehen sein, dass zur Sicherstellung der Not-Aus-Funktionalität die Betätigungseinrichtung betätigt und anschließend losgelassen wird und daraufhin eine Betätigung der Hauptwerkzeugmaschine freigegeben wird.

Bei einer vorteilhaften Ausführung der Erfindung ist die Übertragungseinrichtung eine drahtlose Übertragungseinrichtung, insbesondere eine optische Übertragungseinrichtung oder eine Funkübertragungseinrichtung. Die Übertragungseinrichtung kann dabei auf verschiedenen Funktionsprinzipien und/oder Standards basieren. Die Funktionsweise der Übertragungseinrichtung kann auf einer Signalübertragung im Radiofrequenzbereich beispielsweise mittels Ultrakurzwelle, Kurzwelle oder Mittelwelle oder auf einer Signalübertragung im infraroten oder optischen Frequenzbereich basieren. Insbesondere ist die Übertragungseinrichtung als RFID-Übertragungseinrichtung, als Bluetooth-Übertragungseinrichtung, als Bluetooth Low Energy (BLE)-Übertragungseinrichtung, als NFC-Übertragungseinrichtung, als WiFi-Übertragungseinrichtung, als QR-Übertragungseinrichtung oder als DMC-Übertragungseinrichtung ausgeführt. Weiterhin kann die Übertragungseinrichtung als WLAN-Übertragungseinrichtung, als ZigBee-Übertragungseinrichtung, als Wibree-Übertragungseinrichtung, WiMAX-Übertragungseinrichtung, als LoRa-Übertragungseinrichtung, als IrDA-Übertragungseinrichtung oder als nach optischem Richtfunk arbeitende Übertragungseinrichtung ausgeführt sein.

Die Hauptwerkzeugmaschine ist bei einer vorteilhaften Ausführung der Erfindung eine Kernbohrwerkzeugmaschine oder eine Wandsägemaschine, wobei das Hilfsgerät eine Vorschubeinrichtung für die Hauptwerkzeugmaschine sein kann.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine vereinfachte Darstellung eines eine Kernbohrmaschine, einen Bohrständer und eine Vorschubeinrichtung aufweisenden Systems; und
- Fig. 2: eine vereinfachte Darstellung eines Ablaufdiagramms einer Ausführungsform eines erfindungsgemäßen Verfahrens zum Betreiben des Systems gemäß Fig. 1.

### Ausführungsbeispiel:

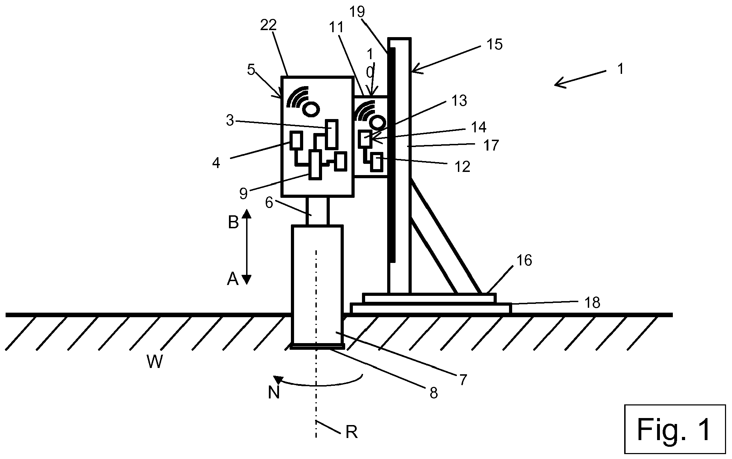

Fig. 1 zeigt ein erfindungsgemäß ausgeführtes System 1 umfassend eine als Kernbohrmaschine ausgeführte Hauptwerkzeugmaschine 5. Die Kernbohrmaschine 5 ist zum Schneiden von Löchern in harte Werkstoffe W, wie beispielsweise Beton, Zement, Ziegelwerk oder dergleichen ausgeführt.

Das System 1 weist weiterhin ein als Vorschubeinrichtung 10 bzw. Antriebseinrichtung ausgeführtes Hilfsgerät auf, mittels welcher die Kernbohrmaschine 5 mit einem Bohrständer 15 beweglich verbunden ist. Der Bohrständer 15 weist im Wesentlichen eine Fußeinrichtung 16 sowie eine als Führungsschiene 17 ausgeführte Führungseinrichtung auf. Wie in Fig. 1 gezeigt kann die Fußeinrichtung 16 waagerecht auf einen zu bearbeitenden Untergrund W befestigt werden. Alternativ hierzu kann die Fußeinrichtung 16 auch an schräg stehenden oder insbesondere senkrecht verlaufenden Untergründen angeordnet werden.

Die Befestigung der Fußeinrichtung 16 an dem Untergrund W kann dabei mittels Schrauben oder einer Verspannung erfolgen. Vorliegend weist der Bohrständer 15 im Bereich der Fußeinrichtung 16 eine Festlegungseinrichtung 18 in Form eines Unterdruckrings auf. Die Festlegungseinrichtung 18 ist beispielsweise mit einer nicht näher ersichtlichen Unterdruckeinrichtung verbunden, mittels welcher ein Ringraum der Festlegungseinrichtung 18 vakuumierbar ist, so dass der Bohrständer 15 durch den im Bereich des Ringraums vorliegenden Unterdruck sicher an dem Untergrund W gehalten ist.

Die Führungsschiene 17 erstreckt sich hier im Wesentlichen in einem 90°-Winkel zu der Fußeinrichtung 16 bzw. zu dem Untergrund W. Alternativ hierzu kann die Führungsschiene 17 auch in einem Winkel größer oder kleiner als 90° gegenüber der Fußeinrichtung 16 bzw. Untergrund W mit der Fußeinrichtung 16 verbunden sein.

Des Weiteren weist die Führungsschiene 17 an einer Seite eine Zahnstangeneinrichtung 19 auf, die sich über einen großen Teil der Länge der Führungsschiene 17 und insbesondere im Wesentlichen über die gesamte Länge der Führungsschiene 17 erstreckt.

Wie bereits vorstehend erwähnt, ist die Vorschubeinrichtung 10 zwischen der Kernbohrmaschine 5 und dem Bohrständer 15 positioniert. Mit Hilfe der Vorschubeinrichtung 10 kann die Kernbohrmaschine 5 entlang der Führungsschiene 17 des Bohrständers 15 bewegt werden. In Bezug auf das in Fig. 1 dargestellte Ausführungsbeispiel kann die Kernbohrmaschine 5 reversibel in Pfeilrichtung A oder B bewegt werden. Die Vorschubeinrichtung 10 verfügt hierzu über eine in Fig. 1 nicht dargestellte erste Befestigungseinrichtung, mit der die Kernbohrmaschine 5 an einem Gehäuse 11 der Vorschubeinrichtung 10 lösbar anbindbar ist. Darüber hinaus weist die Vorschubeinrichtung 10 noch eine zweite, in Fig. 1 ebenfalls nicht ersichtliche Befestigungseinrichtung, mit der das Gehäuse 11 der Vorschubeinrichtung 10 mit der Führungsschiene 17 des Bohrständers 15 verbindbar ist. Die zweite Befestigungseinrichtung weist hierzu eine nicht gezeigte Halteeinheit und eine ebenfalls nicht gezeigte Zahnradeinheit auf. Mit Hilfe der Halteeinheit ist die Vorschubeinrichtung 10 an der Führungsschiene 17 gehalten. Das entsprechend ausgestaltete Zahnrad greift in die Zahnstangenvorrichtung ein und führt dadurch die Vorschubeinrichtung 10 entlang der Führungsschiene 17. Um die Zahnradeinheit in eine Drehbewegung zu versetzen, besitzt die Vorschubeinrichtung 10 weiterhin einen Antrieb. Bei dem Antrieb kann es sich um einen Elektromotor samt Getriebe- bzw. Übersetzungseinheit handeln. Bei dem Elektromotor kann es sich beispielsweise um einen Universalmotor handeln. Es sind jedoch auch andere geeignete Elektromotoren möglich. Weder der Antrieb noch die Getriebe- bzw. Übersetzungseinheit sind in den Figuren dargestellt.

Die Vorschubeinrichtung 10 enthält des Weiteren eine Regel- und Steuerungseinrichtung, mit der Bewegungsparameter wie die Geschwindigkeit, Wegstrecke, Bewegungsstart- und Bewegungsendpunkt sowie andere Parameter, der Vorschubeinrichtung 10 relativ zu dem Bohrständer 15 geregelt bzw. gesteuert werden können.

Die als Kernbohrmaschine 5 ausgestaltete Hauptwerkzeugmaschine enthält im Wesentlichen ein Gehäuse 22, eine Antriebseinheit, ein Getriebe, eine Steuer- und Regeleinrichtung 9, eine Antriebswelle und eine Abtriebswelle 6. Die Steuer- und Regeleinrichtung 9 enthält einen Regler zum Regeln und Steuern des Motorstroms. Die Antriebseinheit, das Getriebe und die Antriebswelle sind in den Figuren nicht dargestellt.

An der Abtriebswelle 6 ist ein Bohrwerkzeug 7 in Gestalt einer Bohrkrone angeschlossen. Die Bohrkrone 7 weist an einem freien Ende eine Schneidekante 8 auf, mit der der zu bearbeitende Werkstoff geschnitten werden kann, um ein Bohrloch zu erzeugen. Die als Elektromotor ausgeführte Antriebseinheit versetzt die Bohrkrone 7 hierzu in eine Drehbewegung in Richtung N. Sowohl die Bohrkrone 7 als auch die Abtriebswelle 6 drehen sich um die gemeinsame Drehachse R. Die Steuer- und Regeleinrichtung 9 dient zum Steuern bzw. Regeln der als Elektromotor ausgeführten Antriebseinheit. Hierbei wird insbesondere die Drehzahl des Elektromotors gesteuert bzw. geregelt. Darüber hinaus kann entsprechend der jeweiligen Situation des Bohrvorgangs ein bestimmter Modus eingestellt werden.

Zur Durchführung des eigentlichen Bohrvorgangs wird die Kernbohrmaschine 5 mit der daran angeschlossenen Bohrkrone 7 mittels des Bohrständers 15 an dem zu bearbeitenden Werkstoff W positioniert und befestigt.

Mit Hilfe der Steuer- und Regeleinrichtung 9 wird an dem Getriebe der Kernbohrmaschine 5 ein Gang ausgewählt und entsprechend eingelegt. Der zu wählende Gang wird anhand des Durchmessers der verwendeten Bohrkrone 7 bestimmt. Durch den gewählten Gang wird entsprechend die Drehzahl des Elektromotors festgelegt, mit der dieser drehen soll. Das Getriebe und insbesondere der gewählte Gang des Getriebes lassen die Bohrkrone 7 in einer entsprechenden Drehzahl, mit einem entsprechenden Drehmoment und einer entsprechenden Anpresskraft drehen. Bei einer alternativen Ausführung kann es auch vorgesehen sein, dass der zu wählende Gang manuell einlegbar ist. Alternativ hierzu können beispielsweise die Parameter Drehzahl, Drehmoment und Anpresskraft auch in Abhängigkeit weiterer Kriterien, wie beispielsweise einem manuell wählbaren Betriebsmodus, beispielsweise einem Economy Modus oder einem High-Performance Modus, oder in Abhängigkeit des vorliegenden Untergrunds gewählt werden.

Als nächstes wird ein Ein- und Ausschalter an der Kernbohrmaschine 5 betätigt. Der Ein- und Ausschalter ist Bestandteil der Steuer- und Regeleinrichtung 9 und in den Figuren nicht dargestellt. Nach dem Betätigen des Ein- und Ausschalters beginnt sich die Bohrkrone 7 in Richtung N zu drehen. Die Bohrkrone 7 und insbesondere die Schneidekante 8 der Bohrkrone 7 befinden sich zu Beginn des Bohrvorgangs noch (in Pfeilrichtung B) über dem Werkstoff W. Die Position der Bohrkrone 7 über dem Werkstoff W ist in den Figuren nicht dargestellt.

Zu Beginn des Bohrvorgangs wird die Kernbohrmaschine 5 mit der sich drehenden Bohrkrone 7 mittels der Vorschubeinrichtung 10 entlang der Führungsschiene 17 des Bohrständers 15 auf den Werkstoff W zubewegt (Pfeilrichtung A in Fig. 1).

Sobald die Schneidekante 8 der Bohrkrone 7 Kontakt mit der Oberfläche des Werkstoffs W hat, wird die Bohrkrone 7 mit einer relativ geringen Anpresskraft auf den Werkstoff W gedrückt (Pfeilrichtung A), um eine erste Führungsrinne in die Oberfläche des Werkstoffs W zu schneiden. Die Anpresskraft wird durch die Vorschubeinrichtung 10 erzeugt und mittels der Regel- und Steuerungseinrichtung der Vorschubeinrichtung 10 geregelt bzw. gesteuert. Beispielsweise beträgt die Tiefe in Pfeilrichtung A ungefähr zwischen 2 bis 5 mm. Eine relativ niedrige Anpresskraft ist dabei notwendig, da ansonsten durch den hohen Widerstand des harten Werkstoffs W die Drehzahl der Bohrkrone 7 zu stark abfällt bzw. die Bohrkrone 7 auch vollständig zum Stillstand kommen kann. Mit einer zu niedrigen Drehzahl reduziert sich entsprechend auch die Leistung der Bohrkrone 7, d.h. insbesondere die Schneideleistung der Bohrkrone 7 in dem Werkstoff W, wodurch kein genügender Bohrfortschritt mehr erreicht werden kann.

Es ist eine Übertragungseinrichtung 14 vorgesehen, die eine der Kernbohrmaschine 5 zugeordnete Sende- und Empfangseinrichtung 3 und ein der Vorschubeinrichtung 10 zugeordnete Sende- und Empfangseinrichtung 13 aufweist. Die Übertragungseinrichtung 14 ist drahtlos ausgeführt und kann grundsätzlich mittels beliebig auswählbarer Übertragungsprinzipien arbeiten. Beispielsweise kann die Übertragungseinrichtung 14 als Funkübertragungseinrichtung ausgeführt sein. Insbesondere handelt es sich bei der Übertragungseinrichtung 14 um eine RFID-Übertragungseinrichtung, allerdings kann es sich alternativ hierzu beispielsweise auch um eine Bluetooth-Übertragungseinrichtung, eine NFC-Übertragungseinrichtung, eine WiFi-Übertragungseinrichtung, eine QR-Übertragungseinrichtung, eine DMC-Übertragungseinrichtung, eine WLAN-Übertragungseinrichtung, eine ZigBee-Übertragungseinrichtung, eine Wibree-Übertragungseinrichtung, eine WiMAX-Übertragungseinrichtung, eine IrDA-Übertragungseinrichtung oder eine nach optischem Richtfunk arbeitende Übertragungseinrichtung handeln.

Es ist vorliegend eine mit der Steuer- und Regeleinrichtung 9 verbundene Speichereinrichtung 21 vorgesehen, in der über die Übertragungseinrichtung 14 übertragene Signale zumindest temporär speicherbar sind. Die in der Speichereinrichtung 21 gespeicherten Informationen können ausgelesen und ausgewertet werden.

Bevor die Kernbohrmaschine 5 zur Herstellung der Kernbohrung betreibbar ist, wird vorliegend eine sichere Verbindung zwischen der Kernbohrmaschine 5 und der Vorschubeinrichtung 10 hergestellt und eine Not-Aus-Funktionalität der Vorschubeinrichtung 10 getestet und/oder aktiviert. Hierzu weist die Kernbohrmaschine 5 eine für anwenderseitige Anforderungen ausgeführte Eingabeeinrichtung 4, beispielsweise in Form eines Schalters, und die Vorschubeinrichtung 10 eine insbesondere als Schalter ausgeführte Betätigungseinrichtung 12 auf. Der Schalter 12 ist hier zwischen einer ersten Position und einer zweiten Position verlagerbar, wobei in der ersten Position des Schalters 12 eine Betätigung der Vorschubeinrichtung 10 nicht möglich bzw. deaktiviert ist.

Bei einer Überführung des Schalters 12 von der ersten Position in die zweite Position ist vorliegend sowohl eine sichere Verbindung zwischen der Kernbohrmaschine 5 und der Vorschubeinrichtung 10 herstellbar und eine Not-Aus-Funktionalität der Vorschubeinrichtung 10, die in den Schalter 12 implementiert ist, aktivierbar. Zudem kann es vorgesehen sein, dass durch die Verlagerung des Schalters 12 von der ersten Position in die zweite Position zusätzlich auch eine Betätigung der Vorschubeinrichtung 10 und/oder der Kernbohrmaschine 5 freigebbar ist. Unter der Herstellung einer sicheren Verbindung zwischen der Kernbohrmaschine 5 und der Vorschubeinrichtung 10 wird die Durchführung eines Paarungs- und Authentifizierungsverfahrens, eines sogenannte Pairing Processes, verstanden.

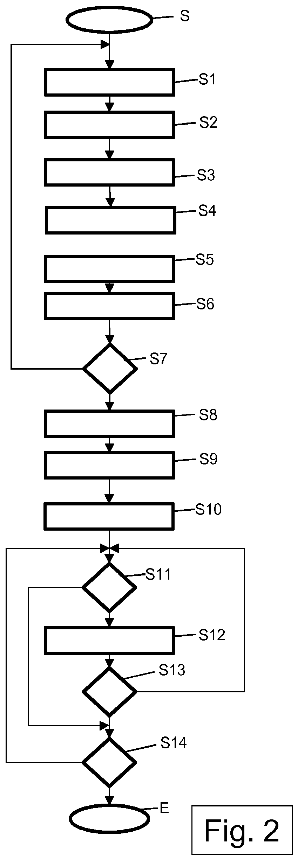

Im Folgenden wird ein Verfahren zum Betreiben des Systems 1 gemäß des in Fig. 2 dargestellten Ablaufdiagramms näher beschrieben, mittels dem diese Funktionalitäten umsetzbar sind und insbesondere eine sichere Verbindung zwischen der Kernbohrmaschine 5 und der Vorschubeinrichtung 10 herstellbar ist und die Not-Aus-Funktionalität der Vorschubeinrichtung 10 getestet und/oder aktiviert werden kann.

Das Verfahren beginnt mit dem Start S. Im Schritt S1 erfolgt eine anwenderseitige Betätigung der Eingabeeinrichtung 4 bzw. des Schalters der Kernbohrmaschine 5. Daraufhin wird in Schritt S2 ein eine Verbindungsanfrage repräsentierendes Signal von der Sende- und Empfangseinrichtung 3 der Kernbohrmaschine 5 gesendet, welches in Schritt S3 von der Sende- und Empfangseinrichtung 13 der Vorschubeinrichtung 10 empfangen wird.

Im Schritt S4 wird eine anwenderseitige Betätigung des Schalters 12 der Vorschubeinrichtung 10 vorgenommen und dieser von der ersten Position in die zweite Position überführt. Im darauffolgenden Schritt S5 wird ein eine Verbindungsantwort auf die Verbindungsanfrage repräsentierendes weiteres Signal von der Sende- und Empfangseinrichtung 13 der Vorschubeinrichtung 10 gesendet, welches im Schritt S6 von der Sende- und Empfangseinrichtung 3 der Kernbohrmaschine 5 empfangen wird. Im Schritt S7 wird von der Steuer- und Regeleinrichtung 9 überprüft, ob das weitere Signal innerhalb eines definierten Zeitraums nach Senden des Signals von der Sende- und Empfangseinrichtung 13 der Vorschubeinrichtung 10 empfangen wurde.

Bei negativem Abfrageergebnis im Schritt S7 wird das Verfahren mit Schritt S1 fortgesetzt. Bei positivem Abfrageergebnis im Schritt S7 wird das Verfahren in Schritt S8 fortgesetzt, der Paarungs- und Authentifizierungsvorgang beendet und dabei eine sichere Verbindung der Kernbohrmaschine 5 mit der Vorschubeinrichtung 10 hergestellt. Um die sichere Verbindung zwischen der Kernbohrmaschine 5 und der Vorschubeinrichtung 10 herzustellen, kann es vorgesehen sein, dass weitere Signale zwischen den Sende- und Empfangseinrichtung 3, 13 übermittelt werden.

Im Schritt S9 wird die Not-Aus-Funktionalität des Schalters 12 der Vorschubeinrichtung 10 getestet bzw. aktiviert, wobei dies beispielsweise auch gleichzeitig oder vorgelagert zu Schritt S5 durchgeführt werden kann und insbesondere direkt durch eine Verlagerung des Schalters 12 der Vorschubeinrichtung 10 von der ersten Position in die zweite Position umgesetzt ist.

Im Schritt S10 wird ein Betrieb der Vorschubeinrichtung 10 und/oder der Kernbohrmaschine 5 freigegeben, so dass bei anwenderseitiger Betätigung des Ein- und Ausschalters der Kernbohrmaschine 5 ein Kernbohrvorgang in oben näher beschriebenem Umfang gestartet werden kann.

Im Schritt S11 wird überprüft, ob die Not-Aus-Funktion betätigt wird. Dies ist beispielsweise dann der Fall, wenn der Schalter 12 anwenderseitig von der zweiten Position in die erste Position überführt wird. Der Schalter 12 ist hierzu insbesondere als Druckschalter bzw. Druckknopf ausgeführt, der durch Einbringung einer Druckkraft von der zweiten Position in die erste Position überführbar ist. Bei positivem Abfrageergebnis wird die Vorschubeinrichtung 10 und/oder die Bohrmaschine 5 im Schritt S12 deaktiviert und ein Betrieb unterbrochen. Im darauffolgenden Schritt S13 wird wiederum überprüft, ob der Schalter 12 anwenderseitig von der ersten Position in die zweite Position verlagert wurde. Bei negativem Abfrageergebnis wird das Verfahren mit Schritt S11 fortgesetzt. Bei positivem Abfrageergebnis im Schritt S13 wird das Verfahren ebenso wie bei negativem Abfrageergebnis im Schritt S11 mit Schritt S14 fortgesetzt.

Im Schritt S14 wird abgefragt, ob sich zu definierende relevante Rahmenbedingungen in vorgegebenem Umfang geändert haben und beispielsweise eine weitere Betätigung des Schalters 12 vorliegt oder die Verbindung zwischen der Kernbohrmaschine 5 und der Vorschubeinrichtung 10 getrennt wurde. Bei positivem Abfrageergebnis wird das Verfahren hier bei Schritt S11 fortgesetzt. Bei negativem Abfrageergebnis wird das Verfahren bei Schritt E beendet.

### Bezugszeichenliste

- 1: System
- 3: Sende- und Empfangseinrichtung
- 4: Eingabeeinrichtung
- 5: Hauptwerkzeugmaschine; Kernbohrmaschine
- 6: Abtriebswelle
- 7: Bohrwerkzeug
- 8: Schneidekante
- 9: Steuer- und Regeleinrichtung
- 10: Hilfsgerät; Vorschubeinrichtung
- 11: Gehäuse
- 12: Betätigungseinrichtung; Schalter
- 13: Sende- und Empfangseinrichtung
- 14: Übertragungseinrichtung
- 15: Bohrständer
- 16: Fußeinrichtung
- 17: Führungsschiene
- 18: Festlegungseinrichtung
- 19: Zahnstangeneinrichtung
- 21: Speichereinrichtung
- 22: Gehäuse

- A, B: Bewegungsrichtung
- E: Ende
- N: Drehrichtung
- R: Drehachse
- S: Start
- S1 bis S14: Schritt
- W: Untergrund

## Patentansprüche

1. Verfahren zum Betreiben eines eine Hauptwerkzeugmaschine (5) und ein Hilfsgerät (10) umfassenden Systems (1), wobei die Hauptwerkzeugmaschine (5) und das Hilfsgerät (10) jeweils eine Sende- und Empfangseinrichtung (3, 13) einer Übertragungseinrichtung (14) aufweisen, und wobei die Hauptwerkzeugmaschine (5) mit einer Eingabeeinrichtung (4) und das Hilfsgerät mit einer Betätigungseinrichtung (12) ausgeführt ist und eine Steuereinrichtung (9) vorgesehen ist,
**dadurch gekennzeichnet, dass** das Verfahren folgende Schritte umfasst:
- Senden wenigstens eines eine Verbindungsanfrage repräsentierenden Signals von der Sende- und Empfangseinrichtung (3) der Hauptwerkzeugmaschine (5) an die Sende- und Empfangseinrichtung (13) des Hilfsgeräts (10) nach einer anwenderseitigen Betätigung der Eingabeeinrichtung (4) der Hauptwerkzeugmaschine (5) (S1, S2);
- Senden wenigstens eines eine Verbindungsantwort repräsentierenden weiteren Signals von der Sende- und Empfangseinrichtung (13) des Hilfsgeräts (10) an die Sende- und Empfangseinrichtung (3) der Hauptwerkzeugmaschine (5) nach einer anwenderseitigen Betätigung der Betätigungseinrichtung (12) der Hauptwerkzeugmaschine (5) (S4, S5);
- Herstellen einer Verbindung zwischen der Hauptwerkzeugmaschine (5) und des Hilfsgeräts (10) (S8); und
- Aktivieren und/oder Testen einer Not-Aus-Funktionalität der Betätigungseinrichtung (12) durch die anwenderseitige Betätigung der Betätigungseinrichtung (12) des Hilfsgeräts (10) (S9).

2. Verfahren nach Anspruch 1,
**gekennzeichnet durch** die Überführung des Hilfsgeräts (10) in einen einen Betrieb des Hilfsgerät (10) freigebenden Zustand durch die anwenderseitige Betätigung der Betätigungseinrichtung (12) des Hilfsgeräts (10) (S10).

3. Verfahren nach einem der Ansprüche 1 oder 2,
**dadurch gekennzeichnet, dass** bei einer Betätigung der Betätigungseinrichtung (12) nach einer Aktivierung der Not-Aus-Funktionalität und bei einem Betrieb des Hilfsgeräts (10) das Hilfsgerät (10) und/oder die Hauptwerkzeugmaschine (5) deaktiviert wird bzw. werden (S12).

4. Hilfsgerät (10) zur Durchführung des Verfahrens gemäß einem der Ansprüche 1 bis 3,
**dadurch gekennzeichnet, dass** das Hilfsgerät (10) eine Sende- und Empfangseinrichtung (13) einer Übertragungseinrichtung (14) und eine Betätigungseinrichtung (12) aufweist.

5. Hilfsgerät nach Anspruch 4,
**dadurch gekennzeichnet, dass** die Betätigungseinrichtung (12) zwischen zwei Positionen verstellbar ist, wobei in einer ersten Position der Betätigungseinrichtung (12) ein Betrieb des Hilfsgeräts (10) unterbunden und in einer zweiten Position der Betätigungseinrichtung (12) ein Betrieb des Hilfsgeräts (10) freigegeben ist und eine Not-Aus-Funktionalität aktiviert ist.

6. Hilfsgerät nach einem der Ansprüche 4 oder 5,
**dadurch gekennzeichnet, dass** die Betätigungseinrichtung (12) als Schalter, Taster, oder Magnetkontakt ausgeführt ist.

7. Hilfsgerät nach einem der Ansprüche 4 bis 6,
**dadurch gekennzeichnet, dass** es als Vorschubeinrichtung (10) für eine insbesondere als Kernbohrmaschine (5) oder Wandsägemaschine ausgeführte Hauptwerkzeugmaschine ausgeführt ist.

8. System (1) zur Durchführung des Verfahrens nach einem der Ansprüche 1 bis 7,
**dadurch gekennzeichnet, dass** eine Hauptwerkzeugmaschine (5), ein Hilfsgerät (10) nach einem der Ansprüche 4 bis 7 und eine Steuereinrichtung (9) vorgesehen sind und sowohl die Hauptwerkzeugmaschine (5) als auch das Hilfsgerät (10) jeweils mit einer Sende- und Empfangseinrichtung (3, 13) einer Übertragungseinrichtung (14) ausgeführt sind, und wobei die Hauptwerkzeugmaschine (5) eine Eingabeeinrichtung (4) und das Hilfsgerät (10) eine Betätigungseinrichtung (12) aufweist.

9. System nach Anspruch 8,
**dadurch gekennzeichnet, dass** die Übertragungseinrichtung (14) eine optische Übertragungseinrichtung oder eine Funkübertragungseinrichtung ist und insbesondere als RFID-Übertragungseinrichtung, als Bluetooth-Übertragungseinrichtung, als Bluethooth-Low-Energy-Übertragungseinrichtung, als NFC-Übertragungseinrichtung, als WiFi-Übertragungseinrichtung, als QR-Übertragungseinrichtung, als DMC-Übertragungseinrichtung, als WLAN-Übertragungseinrichtung, als ZigBee-Übertragungseinrichtung, als Wibree-Übertragungseinrichtung, WiMAX-Übertragungseinrichtung, als LoRa-Übertragungseinrichtung, als LoRa-Übertragungseinrichtung, als IrDA-Übertragungseinrichtung oder als nach optischem Richtfunk arbeitende Übertragungseinrichtung ausgeführt ist.

10. System nach einem der Ansprüche 8 oder 9,
**dadurch gekennzeichnet, dass** die Hauptwerkzeugmaschine (5) eine Kernbohrmaschine oder eine Wandsägemaschine ist.
